# EUROPEAN PATENT APPLICATION

(11) **EP 3 986 024 A1**
(43) Date of publication of application: **20.04.2022**
(21) Application number: 20827591.7
(22) Date of filing: 20.05.2020
(51) Int. Cl.: H04W 28/24

(54) **DATA TRANSMISSION METHOD AND DEVICE, QUALITY OF SERVICE FLOW MANAGEMENT METHOD AND DEVICE, AND MEDIUM**

(30) Priority: 17.06.2019 CN 201910522143
(71) Applicant: Tencent Technology (Shenzhen) Company Limited, Shenzhen, Guangdong 518057 (CN)
(72) Inventor: WANG, Tao, Shenzhen, Guangdong 518057 (CN)
(74) Representative: Eisenführ Speiser
(86) International application number: PCT/CN2020/091188
(87) International publication number: WO 2020/253456

(57) **Abstract**

Disclosed is a data transmission method, applied to a first device, such as a user equipment (UE) or a user panel function (UPF) network element. The method comprises: acquiring data to be transmitted; determining, according to network type information comprised in an extended Ethernet packet filter set, that the data is time sensitive communication (TSC) data; determining a transmission characteristic of the TSC data according to the extended Ethernet packet filter set; and mapping, according to the transmission characteristic, the TSC data to a quality of service (QoS) flow corresponding to the transmission characteristic for transmission. The present application can transmit different types of TSC data by means of different QoS flows, thereby improving the accuracy of TSC data transmission.

## Description

This application claims priority to Chinese Patent Application No. 201910522143.1, entitled "DATA TRANSMISSION METHOD AND DEVICE, QUALITY OF SERVICE FLOW MANAGEMENT METHOD AND DEVICE, AND MEDIUM", and filed with the China National Intellectual Property Administration, PRC on June 17, 2019, which is incorporated herein by reference in its entirety.

### FIELD

This application relates to the technical field of communications, and in particular to technologies of data transmission and Quality of Service flow management.

### BACKGROUND

In the Release16 (R16) version for 5^{th} Generation (5G) technology, the Time Sensitive Communication (TSC) of the Time Sensitive Network (TSN) is introduced, so that the 5G technology supports industrial automation manufacturing applications requiring precise time control.

TSC needs to implement at least the transmission of time synchronization messages between a terminal (also called a User Equipment (UE)) and a User Plane Function (UPF) network element, and the transmission of service data with a determined delay between the UE and the UPF.

The transmission of TSC data is performed based on the Quality of Service (QoS) flow. The TSC data is generally transmitted by using a unified QoS flow.

### SUMMARY

A data transmission method is provided according to embodiments of this application, with which different types of TSC data can be transmitted by using different QoS flows, to improve the accuracy of transmission of the TSC data. A Quality of Service flow management method and device, and a storage medium are further provided according to embodiments of this application.

In a first aspect of this application, a data transmission method is provided, which is applied to a first device. The data transmission method includes:
obtaining to-be-transmitted data;
determining, based on network type information included in an extended Ethernet packet filter set, that the to-be-transmitted data is Time Sensitive Communication (TSC) data;
determining a transmission characteristic of the TSC data based on the extended Ethernet packet filter set; and
mapping, based on the transmission characteristic, the TSC data to a Quality of Service (QoS) flow corresponding to the transmission characteristic for transmission.

In a second aspect of this application, a Quality of Service flow management method is provided, which is applied to a second device. The Quality of Service flow management method includes:
receiving a session creation request sent by a first device;
creating a first Quality of Service (QoS) flow based on the session creation request and a QoS management policy, the first QoS flow corresponding to a first expanded Ethernet packet filter set, and the first expanded Ethernet packet filter set including first information used for indicating a transmission characteristic and network type information; and
sending the first expanded Ethernet packet filter set to the first device.

In a third aspect of this application, a data transmission device is provided, which includes: an obtaining module, a first determining module, a second determining module, a mapping module, and a transmitting module. The obtaining module is configured to obtain to-be-transmitted data. The first determining module is configured to determine, based on network type information in an extended Ethernet packet filter set, that the to-be-transmitted data obtained by the obtaining module is TSC data. The second determining module is configured to determine, based on the extended Ethernet packet filter set, a transmission characteristic of the TSC data determined by the first determining module. The mapping module is configured to map, based on the transmission characteristic determined by the second determining module, the TSC data to a QoS flow corresponding to the transmission characteristic. The transmitting module is configured to transmit the TSC data based on the QoS flow mapped by the mapping module.

With reference to the above third aspect, in a possible implementation, in a case that the network type information is of an Ethertype, the first determining module is further configured to:
determine whether a parameter corresponding to the Ethertype of the to-be-transmitted data is used for indicating a TSC type; and
determine, in a case that the parameter corresponding to the Ethertype is used for indicating the TSC type, that the to-be-transmitted data is TSC data.

In a possible implementation, the second determining module is further configured to:
determine a data type of the TSC data;
determine, in a case that the data type is an event type, that the transmission characteristic of the TSC data is a first characteristic; and
determine, in a case that the data type is a general type, that the transmission characteristic of the TSC data is a second characteristic. Data transmitted based on the first characteristic has a higher priority in resource allocation and resource scheduling than data transmitted based on the second characteristic.

In a possible implementation, the second determining module is further configured to:
obtain an indicator for identifying an indicating bit of the data type;
determine, in a case that the indicator is located in a first interval, that the data type is the event type; and
determine, in a case that the indicator is located in a second interval, that the data type is the general type.

The first interval corresponding to the first characteristic, and the second interval corresponding to the second characteristic.

In a possible implementation, the mapping module is further configured to:
map, in a case that the data type is the event type, the TSC data to a first QoS flow corresponding to the first characteristic; and
map, in a case that the data type is the general type, the TSC data to a second QoS flow corresponding to the second characteristic.

In a possible implementation, the extended Ethernet packet filter set further includes attribute information of a protocol header field of a Precision Time Protocol (PTP) or a general Precision Time Protocol (gPTP). The PTP/gPTP protocol is formulated by the Institute of Electrical and Electronics Engineers (IEEE).

The second determining module is further configured to determine attribute information of the TSC data. The mapping module is further configured to:
map, in a case that the TSC data belongs to first attribute information and the data type is the event type, the TSC data to a first QoS flow corresponding to the first characteristic for transmission;
map, in a case that the TSC data belongs to first attribute information and the data type is the general type, the TSC data to a second QoS flow corresponding to the second characteristic for transmission;
map, in a case that the TSC data belongs to second attribute information and the data type is the event type, the TSC data to a third QoS flow corresponding to the first characteristic for transmission; and
map, in a case that the TSC data belongs to second attribute information and the data type is the general type, the TSC data to a fourth QoS flow corresponding to the second characteristic for transmission.

In a possible implementation, the attribute information includes at least one of the following: a clock domain (domainNumber), a Standardization Development organization Identity (SdoId), a source port identity, and version information of the Precision Time Protocol (versionPTP).

In a possible implementation, in a case that the device is a user equipment (UE), the extended Ethernet packet filter set is issued to the UE by a Session Management Function (SMF) network element according to a QoS rule; and
in a case that the device is a User Plane Function (UPF) network element, the extended Ethernet packet filter set is issued to the UPF network element by the SMF network element according to a Packet Detection Rule (PDR).

In a possible implementation, the mapping module is further configured to map, in a case that the device is a UE, the TSC data to an air interface resource indicated by the QoS flow corresponding to the transmission characteristic for uplink transmission.

In a possible implementation, the mapping module is further configured to map, in a case that the device is a UPF network element, the TSC data to a tunnel resource indicated by the QoS flow corresponding to the transmission characteristic for downlink transmission.

In a possible implementation, the transmitting module is further configured to transmit a session creation request used or a session modification request, the session creation request being used for triggering a second device to create a QoS flow, the session modification request being used for triggering the second device to modify a QoS flow.

In a possible implementation, the transmission characteristic includes at least one of the following:
a resource type, a priority, a Packet Delay Budget (PDB), a Packet Error Rate (PER), a Maximum Data Burst Volume (MDBV), an Average Window (AV), an Allocation Retention and Priority (ARP), a TSN Source Port ID and Destination Port ID pair, a QoS Flow Identity (QFI), or a transport layer Internet Protocol Differentiated Services Code Point Marking (IP DSCP Marking).

In a fourth aspect of this application, a Quality of Service flow management device is provided, which includes: a receiving module, a creating module, and a sending module. The receiving module is configured to receive a session creation request sent by a first device. The creating module is configured to create a first QoS flow based on the session creation request received by the receiving module and a QoS management policy. The first QoS flow corresponds to a first expanded Ethernet packet filter set, and the first expanded Ethernet packet filter set includes network type information and first information used for indicating a transmission characteristic. The sending module is configured to send to the first device the first expanded Ethernet packet filter set corresponding to the first QoS flow created by the creating module.

In a possible implementation, the device further includes a modifying module. The receiving module is further configured to receive a session modification request sent by the first device. The modifying module is configured to modify the first QoS flow to a second QoS flow based on the session modification request and the QoS management policy. The second QoS flow corresponds to a second extended Ethernet packet filter set, and the second extended Ethernet packet filter set includes network type information and second information used for indicating a transmission characteristic. The sending module is further configured to send the second extended Ethernet packet filter set to the first device.

In a possible implementation, in a case that the device is a UE, the first expanded Ethernet packet filter set and the second extended Ethernet packet filter set are included in a QoS rule to be sent to the UE.

In a possible implementation, in a case that the first device is a UPF network element, the first expanded Ethernet packet filter set and the second extended Ethernet packet filter set are included in a PDR to be sent to the UPF network element.

In a fifth aspect of this application, a data transmission device is provided, which includes: a communication interface, a processor, and a memory. The memory is configured to store computer executable instructions. When the data transmission device operates, the communication interface is configured to perform operations performed by the transmitting module in the first aspect or any possible implementation of the first aspect, and the processor is configured to execute the computer executable instructions stored in the memory, to perform operations performed by the first determining module, the second determining module, and the mapping module in the first aspect or any possible implementation of the first aspect.

In a sixth aspect of this application, a Quality of Service flow management device is provided, which includes: a communication interface, a processor, and a memory. The memory is configured to store computer executable instructions. When the QoS flow management device operates, the communication interface is configured to perform operations performed by the receiving module and the sending module in the second aspect or any possible implementation of the second aspect, and the processor is configured to execute the computer executable instructions stored in the memory, to perform operations performed by the creating module and the modifying module in the second aspect or any possible implementation of the second aspect.

In a seventh aspect of this application, a computer-readable storage medium is provided. The computer-readable storage medium stores instructions. The instructions, when run on a computer, cause the computer to perform the method according to the first aspect.

In an eighth aspect of this application, a computer-readable storage medium is provided. The computer-readable storage medium stores instructions. The instructions, when run on a computer, cause the computer to perform the method according to the second aspect.

In a ninth aspect of this application, a computer program product is provided, which includes instructions. The instructions, when run on a computer, cause the computer to perform the method according to the first aspect.

In a tenth aspect of this application, a computer program product is provided, which includes instructions. The instructions, when run on a computer, cause the computer to perform the method according to the second aspect.

With the embodiments of this application, a conventional Ethernet packet filter set is extended, so that during data transmission, a suitable QoS flow is selected by using information in the extended Ethernet packet filter set. During data transmission, whether received to-be-transmitted data is TSC data can be determined based on the network type information in the extended Ethernet packet filter set. In a case that it is determined that the to-be-transmitted data is TSC data, a transmission characteristic of the TSC data is determined based on the extended Ethernet packet filter set, to transmit different types of TSC data by using different QoS flows based on the transmission characteristic, thereby realizing isolation of data transmission, thus improving the accuracy of transmission of the TSC data.

### BRIEF DESCRIPTION OF THE DRAWINGS

FIG. 1 is a schematic diagram of a network architecture of a 5G network according to an embodiment of this application.
FIG. 2 is a schematic diagram of another network architecture of a 5G network according to an embodiment of this application.
FIG. 3 is a schematic diagram of another network architecture of a 5G network according to an embodiment of this application.
FIG. 4 is a schematic diagram of a Quality of Service flow management method according to an embodiment of this application.
FIG. 5 is a schematic diagram of a Quality of Service flow management method according to another embodiment of this application.
FIG. 6 is a schematic diagram of a data transmission method according to an embodiment of this application.
FIG. 7 is a schematic diagram of a Quality of Service flow management device according to an embodiment of this application.
FIG. 8 is a schematic diagram of a data transmission device according to an embodiment of this application.
FIG. 9 is a schematic diagram of a communication device according to an embodiment of this application.

### DESCRIPTION OF EMBODIMENTS

The embodiments of this application will be described below with reference to the drawings. It is apparent that the described embodiments are merely some rather than all of the embodiments of this application. A person of ordinary skill in the art may know that as the technology evolves and a new scenario emerges, the technical solutions provided in the embodiments of this application are also applied to a similar technical problem.

In the specification, claims, and the drawings of this application, the terms "first", "second", and so on are intended to distinguish between similar objects rather than indicating a specific order. It is to be understood that the data used in such a way is interchangeable in proper cases, so that the embodiments described herein can be implemented in other orders than the order illustrated or described herein. Moreover, the terms "include", "contain", and any other variants thereof mean to cover the non-exclusive inclusion. For example, a process, method, system, product, or device that includes a list of steps or units is not necessarily limited to those steps or units that are clearly listed, but may include other steps or units not expressly listed or inherent to such a process, method, system, product, or device.

A data transmission method is provided according to an embodiment of this application, with which different types of TSC data can be transmitted by using different QoS flows, to improve the accuracy of TSC data transmission. A corresponding device and a storage medium are further provided in this application. Detailed descriptions are provided below.

The data transmission method according to the embodiment of this application may be applied to a 5^{th} generation (5G) network, or another network that supports TSC data transmission. The 5G network is taken as an example in the following description.

A structure of the 5G network applicable to this application is described below with reference to the drawings.

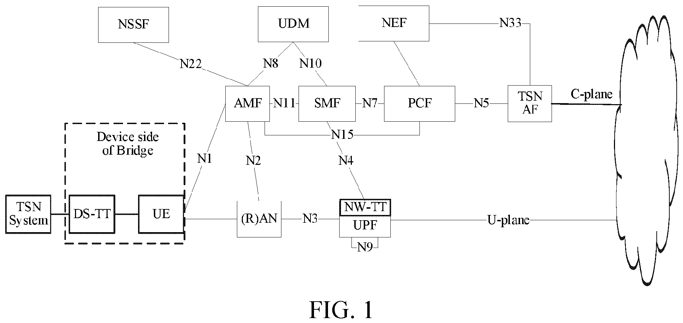

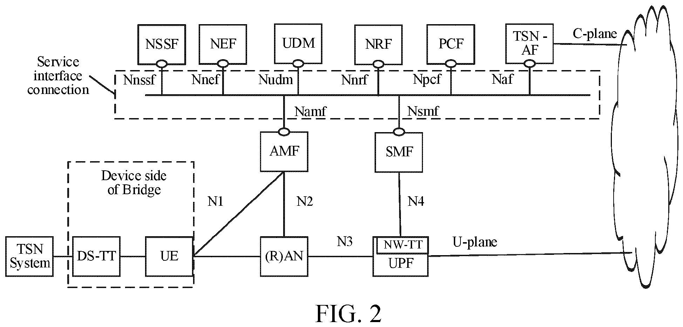

FIG. 1 is a schematic diagram of a communication network architecture of a TSN in a 5G network of this application. FIG. 2 is a schematic diagram of another communication network architecture of a TSN in a 5G network represented in the form of a service interface. The user equipment (UE), the (Radio) Access Network ((R)AN), and the user plane function (UPF) network element in FIG. 1 and FIG. 2 are generally called a U-plane network function network element or entity.

In the TSN, the UE and the Device-side TSN translator (DS-TT) both belong to the Device side of Bridge, and the Device side of Bridge is connected to a TSN system. The UPF network element includes a Network TSN translator (NW-TT).

In order to achieve transparency to the TSN network and the appearance of 5GS as any other TSN bridge, 5GS provides TSN entry and exit ports through the DS-TT and the NW-TT. In an example, the DS-TT and the NW-TT support the following functions: a holding and forwarding function for eliminating jitter; a discovery and reporting function for connectivity of a link layer.

The UE may include: a handheld terminal, a notebook computer, a subscriber unit, a cellular phone, a smart phone, a wireless data card, a Personal Digital Assistant (PDA) computer, a tablet computer, a modem, a handheld device, a laptop computer, a cordless phone or a Wireless Local Loop (WLL) station, a Machine Type Communication (MTC) terminal or another device that may access the network. The UE communicates with the access network device by using an air interface technology.

The (R)AN device is mainly responsible for functions such as radio resource management, Quality of Service (QoS) flow management, data compression and encryption on the air interface side. The access network device may include various forms of base stations, such as macro base stations, micro base stations (also called small stations), relay stations, and access points. In systems using different wireless access technologies, devices with base station functions may have different names, for example, in 5G systems, a device with a base station function is called a gNB.

Other network elements in FIG. 1 and FIG. 2 are called C-plane network function network elements or entities, which are mainly responsible for achieving reliable and stable transmission of user-plane traffic. A session management function (SMF) network element is mainly responsible for user-plane network element selection, user-plane network element redirection, Internet Protocol (IP) address assignment, bearer establishment, modification and release, QoS flow establishment or modification, etc. An Access and Mobility Management Function (AMF) network element is mainly responsible for signaling processing, such as functions of access control, mobility management, attachment and de-attachment, and network element selection. A Policy Control Function (PCF) network element is mainly responsible for providing a unified policy framework to control network behaviors, providing policy rules to C-plane network functions, and obtaining user subscription information related to policy decisions. An Application Function (AF) network element mainly supports interaction with the 3rd Generation Partner Project (3GPP) core network to provide services, such as influencing data routing decisions, policy control functions, or providing some three-party services for the network side. A Network Slice Selection Function (NSSF) network element is mainly responsible for network slice selection. A Network Exposure Function (NEF) network element mainly supports secure interaction between the 3GPP network and a third-party application. The NEF network element can securely expose network capabilities and events to a third party to strengthen or improve the quality of application services. The 3GPP network can also securely obtain relevant data from the third party to enhance the intelligent decision-making of the network. In addition, the NEF network element supports restoration of structured data from a unified database or storage of structured data in the unified database. A Unified Data Management (UDM) network element may be used for data management.

It is to be noted that N1, N2, N3, N4... shown in FIG. 1 and FIG. 2 represent connection interfaces. The network elements in FIG. 1 are connected, and data transmission can be performed between the network elements with the connection relationship shown in FIG. 1. FIG. 2 shows connection of service interfaces. The NSSF network element, the NEF network element, the AMF network element, the SMF network element... and other network elements are connected on the same line. As shown in FIG. 2, any service interface may be invoked to perform a corresponding service, so that the communication is performed conveniently. Nnssf, Nnef, Nudm, Nnrf, Npcf, and Naf represent different service interfaces. In the network elements shown in FIG. 1 and FIG. 2, the UE network element may send uplink data and the UPF network element may send downlink data. No matter the UE sends uplink data or the UPF sends downlink data, in a case that the sent data is TSC data, it is required to map the TSC data to the QoS flow for transmission.

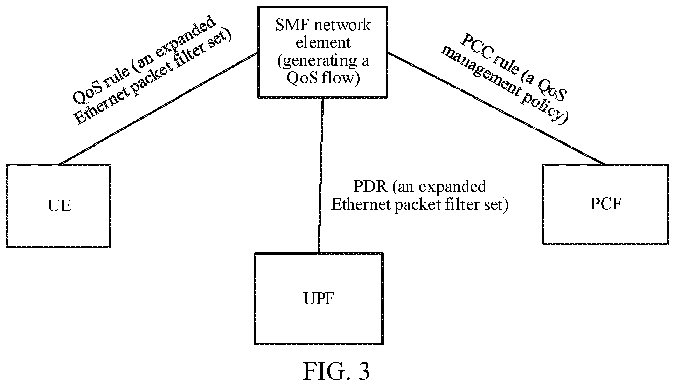

In the embodiments of this application, as shown in FIG. 3, QoS flows used by the UE and the UPF network element during mapping are generated by the SMF network element, and the SMF network element may receive a Policy and Charging Control (PCC) rule from the PCF network element. The PCC rule may include a QoS management policy. The SMF network element may create a QoS flow according to the QoS management policy based on a session creation request sent by the UE, or modify the QoS flow based on the session modification request. Each QoS flow corresponds to an extended Ethernet packet filter set, which includes attribute information of a protocol header field of a Precision Time Protocol (PTP) or a general Precision Time Protocol (gPTP) and network type information. The attribute information includes at least one of the following: a clock domain (domainNumber), a Standardization Development organization Identity (SdoId), a source port identity, and version information of the Precision Time Protocol (versionPTP). The PTP/gPTP protocol is formulated by the Institute of Electrical and Electronics Engineers (IEEE). The SMF network element may carry the extended Ethernet packet filter set in the QoS rule to be sent to the UE, so that the UE can determine the QoS flow based on the extended Ethernet packet filter set in a case that the UE is to send uplink TSC data. The SMF network element may also carry the extended Ethernet packet filter set in a packet detection rule (PDR) to be sent to the UPF network element, so that the UPF network element can determine the QoS flow based on the Ethernet packet filter set in a case that the UPF network element is to sent the downlink TSC data.

The process of creating a QoS flow and modifying the QoS flow by the SMF network element is first described below, and then the process of data transmission performed by the UE or the UPF network element based on the QoS flow provided by the SMF network element is described.

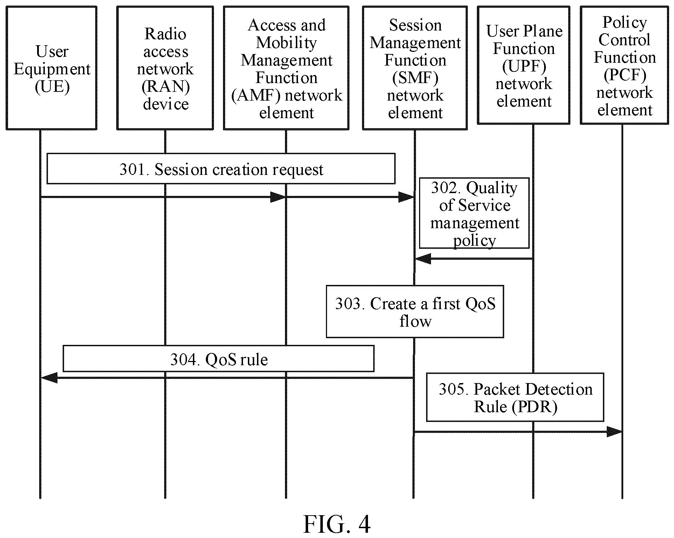

As shown in FIG. 4, a Quality of Service flow management method according to an embodiment of this application may include the following steps 301 to 305.

In step 301, a UE initiates a session creation request.

The session creation request may be initiated by the UE to the SMF network element through the RAN and AMF network elements. The SMF network element may be selected by the AMF network element for the UE.

In step 302, the SMF network element receives a Quality of Service management policy from the PCF network element.

The PCF network element provides a PCC rule for the SMF network element, and the PCC rule may include the QoS management policy.

In step 303, the SMF network element creates a first quality of service (QoS) flow based on the session creation request and the QoS management policy.

The QoS flow may be understood as a set of parameters related to the Quality of Service, e.g., transmission path information that meets certain QoS characteristics. The transmission path information may include a source port identity, a source address, a destination port, and a destination address, etc. The QoS characteristic may include one or more of the following parameters: a resource type, a priority, a packet delay budget (PDB), a packet error rate (PER), a massive data burst volume (MDBV), an average window (AV), an allocation retention and priority (ARP), a jitter, and the like.

The first QoS flow corresponds to the first expanded Ethernet packet filter set. It may also be understood that the SMF network element creates the QoS flow based on the extended Ethernet packet filter set, so that different QoS flows can be created based on different values of the parameters in the extended Ethernet packet filter set. In this way, transmission of different types of TSC data is supported, for example, the transmission of TSC data of different domain Numbers can be supported.

The extended Ethernet packet filter set according to the embodiments of this application, for example, the first expanded Ethernet packet filter set, may include: a source/destination Media Access Control (MAC) address; and an Ethertype.

The Ethertype may be included in the source or destination MAC address. The Ethertype may also be located behind the source or destination MAC address. In a case that the Ethertype is indicated by a preset parameter, it is indicated that the to-be-transmitted data is TSC data, and the preset parameter may be 0X88F7. However, 0X88F7 here is merely used an example, any other preset values stipulated by agreement or negotiated in advance may also be used for indicating that the to-be-transmitted data is TSC data. Moreover, this application is not limited to using the preset parameter of Ethertype to indicate that the to-be-transmitted data is TSC data. For example, if a special address appears in the source or destination Ethernet MAC address, this may also be considered as TSC communication, that is, the to-be-transmitted data is TSC data.

The extended Ethernet packet filter set may also include the data type defined by a header field of the PTP/gPTP protocol, which may also be called MessageType. The data type may include an event type and a general type.

The event type may include the following four types:
a) Sync;
b) Delay_Req;
c) Pdelay_Req; and
d) Pdelay_Resp.

The general type may include the following six types:
Announce;
Follow_Up;
Delay_Resp;
Pdelay_Resp_Follow_Up;
Management; and
Signaling.

The event type and general type above may be indicated by corresponding values in the extended Ethernet packet filter set, which may be understood with reference to the following Table 1:

**Table 1**

| MessageType | Messageclass | Value (hex) |
|---|---|---|
| Sync | event | 0 |
| Delay_Req | event | 1 |
| Pdelay_Req | event | 2 |
| Pdelay_Resp | event | 3 |
| Reserved | -- | 4-7 |
| Announce | general | 8 |
| Follow_Up | general | 9 |
| Delay_Resp | general | A |
| Pdelay_RespFollow Up | general | B |
| Management | general | C |
| Signaling | general | D |
| Reserved | -- | E-F |

Referring to Table 1, if the UE or the UPF network element detects the extended Ethernet packet filter set and determines that an indicator of an indicating bit of the MessageType (for example, the value in Table 1) is any value from 0 to 3, it may be determined that the to-be-transmitted data is of the event type. In a case that the indicator is determined to be any of 8, 9, and A-D, it may be determined that the to-be-transmitted data is of the general type.

The extended Ethernet packet filter set may also include the following information defined in the header field of the PTP/gPTP protocol. For example, the following information may be included:
SdoId (MajorSdoId + MinorSdoId)/ transportSpecific;
versionPTP information;
MessageType;
domainNumber;
Flags;
MessageTypeSpecific;
SourcePortIdentity;
SequenceId
controlField; and
LogMessagInterval.

The first expanded Ethernet packet filter set may include network type information, such as 0X88F7, and first information used for indicating transmission characteristic. The transmission characteristic may include at least one of the following: a resource type, a priority (priority level), a Packet Delay Budget (PDB), a Packet Error Rate (PER), a Maximum Data Burst Volume (MDBV), an Average Window (AV), an Allocation Retention and Priority (ARP), a TSN Source Port ID and Destination Port ID pair, a QoS Flow Identity (QFI), or a transport layer Internet Protocol Differentiated Services Code Point Marking (IP DSCP Marking).

The first information may include a first indicator of the MessageType, such as any indicator of 0 to 3, 8, 9, and Ato D. However, the first information is not limited to the first indicator of the MessageType, and may also be other information that may be used for indicating the transmission characteristic.

In step 304, the SMF network element sends the QoS rule to the UE.

The QoS rule includes the first expanded Ethernet packet filter set corresponding to the first QoS flow.

In step 305, the SMF network element sends a packet detection rule (PDR) to the UPF network element.

The PDR includes the first expanded Ethernet packet filter set corresponding to the first QoS flow.

A communication interface between the SMF network element and the UPF network element is represented by N4 in FIG. 1 or FIG. 2.

Steps 301 to 305 are described by taking a process of generating the first QoS flow and the first expanded Ethernet packet filter set corresponding to the first QoS flow as an example. In fact, the SMF network element may generate multiple QoS flows for the UE. Moreover, the QoS flow may also be modified.

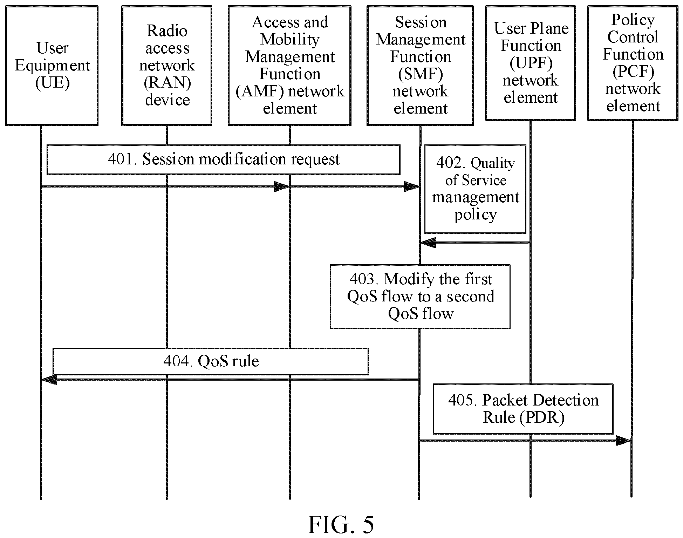

The process of modifying the QoS flow in the embodiments of this application is described below in conjunction with FIG. 5.

As shown in FIG. 5, the Quality of Service flow management method according to another embodiment of this application may include the following steps 401 to 405.

In step 401, a UE initiates a session modification request.

In step 402, the SMF network element receives a Quality of Service management policy from the PCF network element.

In step 403, the SMF network element modifies a first QoS flow into a second QoS flow based on the session modification request and the QoS management policy.

The second QoS flow corresponds to a second extended Ethernet packet filter set. Reference may be made to the description to the first expanded Ethernet packet filter set in step 303 for understanding the content included in the second extended Ethernet packet filter set, where the difference therebetween is the values of MessageType.

The second extended Ethernet packet filter set may include network type information such as 0X88F7, and second information used for indicating the transmission characteristic. The second information may be a second indicator of MessageType, such as any indicator of 0 to 3, 8, 9, and A to D that is different from the first indicator.

In step 404, the SMF network element sends a QoS rule to the UE.

The QoS rule includes the second extended Ethernet packet filter set corresponding to second QoS flow.

In step 405, the SMF network element sends a packet detection rule (PDR) to the UPF network element.

The PDR includes the second extended Ethernet packet filter set corresponding to the second QoS flow.

The solutions in the embodiments of this application described with reference to FIG. 4 and

FIG. 5 are only intended to highlight the focus of this application. In the actual message sending process, other devices or network elements may be required. Reference may be made to the communication process of network elements in the existing 5G network for understanding the participation process of other devices or network elements. This application is intended to expand the existing Ethernet packet filter set, so that a suitable QoS flow can be selected based on information in the extended Ethernet packet filter set during data transmission, and different types of TSC data can be transmitted by using different QoS flows. For example, TSC data of the event type and TSC data of the general type may be transmitted by using different QoS flows, and TSC data of different domain Numbers may also be transmitted by using different QoS flows, such that the isolation of data transmission is implemented, and the accuracy of transmission of various types of data can also be improved.

Based on the contents described above, the data transmission method according to the embodiments of this application is described below.

For ease of description, in the embodiments of this application, the UE or the UPF network element is called a first device, and the SMF network element is called a second device. However, the first device may also include other network elements or devices with the function executable by the UE or UPF network element of this application, and the second device also includes other network elements or devices with the function executable by the SMF network element of this application.

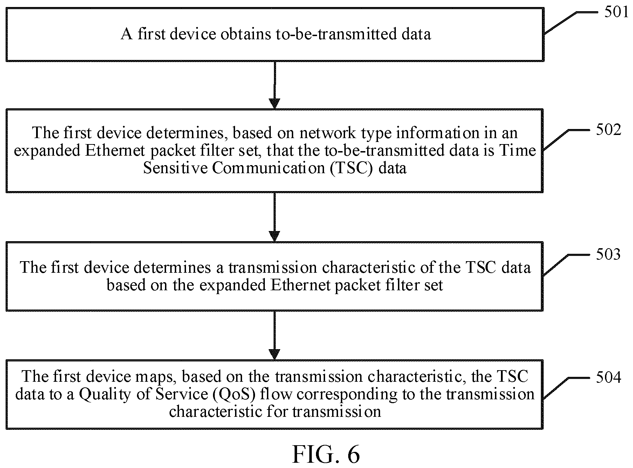

The data transmission method according to the embodiments of this application is described below conjunction with FIG. 6.

As shown in FIG. 6, an data transmission method provided in the embodiment of this application includes the following steps 501 to 504.

In step 501, a first device obtains to-be-transmitted data.

In a case that the first device is a UE, the to-be-transmitted data is uplink data, and in a case that the first device is a UPF network element, the to-be-transmitted data is downlink data.

In step 502, the first device determines, based on network type information in an extended Ethernet packet filter set, that the to-be-transmitted data is time sensitive communication (TSC) data.

The network type information may be a preset parameter of Ethertype described in the above embodiments, such as 0X88F7, and, the network type information may also be other pre-specified or negotiated parameter.

In a case that the first device is a UE, the extended Ethernet packet filter set is issued to the UE by the SMF network element according to a QoS rule. In a case that the first device is a UPF network element, the extended Ethernet packet filter set is issued to the UPF network element by the SMF network element according to a packet detection rule (PDR).

In step 503, the first device determines a transmission characteristic of the TSC data based on the extended Ethernet packet filter set.

The transmission characteristic includes at least one of the following: the resource type, the priority, the PDB, the PER, the MDBV, the AV, the ARP, the TSN Source Port ID and Destination Port ID pair, the QFI, or transport layer IP DSCP Marking.

In step 504, the first device maps, based on the transmission characteristic, the TSC data to a QoS flow corresponding to the transmission characteristic for transmission.

The QoS flow may be understood as a set of parameters related to the Quality of Service, e.g., transmission path information that meets certain QoS characteristics. The transmission path information may include a source port identity, a source address, a destination port, and a destination address, etc. The QoS characteristic may include one or more of the following parameters: a resource type, a priority, a packet delay budget (PDB), a packet error rate (PER), a massive data burst volume (MDBV), an average window (AV), an allocation retention and priority (ARP), a jitter, and the like.

Mapping the TSC data to a QoS flow corresponding to the transmission characteristic can be understood as transmitting the TSC data by using the parameters included in the QoS flow.

In the embodiments of this application, during data transmission, in a case that the to-be-transmitted data is determined to be TSC data, different types of TSC data are transmitted by using different QoS flows, improving the accuracy of transmission of the TSC data.

In some possible embodiments, in a case that the network type information is of an Ethertype, the determining that the to-be-transmitted data is TSC data based on the network type information in the extended Ethernet packet filter set may include: determining whether a parameter corresponding to the Ethertype of the to-be-transmitted data is used for indicating a TSC type; and determining, in a case that the parameter corresponding to Ethertype is used for indicating the TSC type, that the to-be-transmitted data is TSC data.

In the embodiments of this application, the Ethertype may be included in the source or destination MAC address, or the Ethertype is located following the source or destination MAC address. In a case that the Ethertype is indicated by a preset parameter, it is indicated that the to-be-transmitted data is TSC data, and the preset parameter may be 0X88F7. However, 0X88F7 here is merely an example, other preset values stipulated by agreement or negotiated in advance may also be used for indicating that the to-be-transmitted data is TSC data. Moreover, this application is not limited to using the preset parameter of Ethertype to indicate that the to-be-transmitted data is TSC data. For example, if a special address appears in the source or destination Ethernet MAC address, this may also be considered as TSC communication, that is, the to-be-transmitted data is TSC data.

In some possible embodiments, the data type is related to the transmission characteristic, and the transmission characteristics of the to-be-transmitted data of different data types are different. Therefore, the determining the transmission characteristic of the TSC data based on the extended Ethernet packet filter set may include: determining the data type of the TSC data; determining, in a case that the data type is an event type, that the transmission characteristic of TSC data is a first characteristic; and determining, in a case that the data type is a general type, that the transmission characteristic of TSC data is a second characteristic, where the data transmitted based on the first characteristic has a higher priority in resource allocation and scheduling than the data transmitted based on the second characteristic.

In the embodiments of this application, for the data type, reference may be made to the content described in step 303 in the foregoing embodiment, for example, reference may be made to the content corresponding to Table 1. The first characteristic may be a first priority, and the second characteristic may be a second priority. The priority may be a transmission priority or a scheduling priority. In general, the first priority is higher than the second priority, that is, the data transmitted based on the first characteristic has a higher priority in resource allocation and resource scheduling than the data transmitted based on the second characteristic.

Further, the first characteristic may also be a first transmission delay, and the second characteristic may be a second transmission delay. The transmission characteristics in the embodiments of this application may also be expressed by other parameters, which are not limited to the priority and transmission delay listed here.

In some possible embodiments, as shown in Table 1, the data type may be identified by an indicator on an indicating bit. Therefore, the determining the data type of the TSC data may include: obtaining an indicator of an indicating bit that identifies the data type; determining, in a case that the indicator is located in a first interval, that the data type is an event type; and determining, in a case that the indicator is located in a second interval, that the data type is a general type, the first interval corresponds to the first characteristic, and the second interval corresponds to the second characteristic.

In the embodiments of this application, the data type is represented as a MessageType in Table 1. The indicating bit of the MessageType has an indicator, which may be a numerical value or other symbols, for example: 0 to F in Table 1. In Table 1, in a case that the indicator is located in the first interval (the first interval may be, for example, an interval of 0 to 3), it is indicated that the data type is the event type. In a case that the indicator is located in the second interval (the second interval may be, for example, an interval of 8, 9, and A to D), it is indicated that the data type is the general type.

Further, based on the determining manner as shown in Table 1, in a case that the indicating bit of the MessageType has other regulations, the event type and the general type are distinguished based on the corresponding regulations.

In some possible embodiments, since the transmission characteristic is related to the data type, the transmission characteristics of the to-be-transmitted data of different data types are different, and the QoS flows used during transmission are also different. On this basis, the mapping, based on the transmission characteristic, the TSC data to the QoS flow corresponding to the transmission characteristic for transmission may include: mapping, in a case that the data type is an event type, the TSC data to a first QoS flow corresponding to the first characteristic for transmission; and mapping, in a case that the data type is a general type, the TSC data to a second QoS flow corresponding to the second characteristic for transmission.

In the embodiments of this application, because the event type is more important, taking the priority as an example, the priority of the data of the event type is higher than that of the data of the general type. In this way, in a case that the QoS flow is used, the first QoS flow corresponding to the first characteristic is used to transmit the TSC data of the event type. In a case that the data is of the general type, the second QoS flow corresponding to the second characteristic with a lower priority may be used to transmit data of the general type.

In some possible embodiments, the extended Ethernet packet filter set further includes attribute information of a protocol header field of a Precision Time Protocol (PTP) or a general Precision Time Protocol (gPTP). Therefore, the data transmission method according to the embodiments of this application may further include: determining the attribute information of the TSC data, then, a QoS flow for transmitting the TSC data may be determined in combination with the attribute information. In this case, the mapping, based on the transmission characteristic, the TSC data to the QoS flow corresponding to the transmission characteristic for transmission may include: mapping, in a case that the TSC data belongs to first attribute information and the data type is the event type, the TSC data to the first QoS flow corresponding to the first characteristic for transmission; mapping, in a case that the TSC data belongs to the first attribute information and the data type is the general type, the TSC data to the second QoS flow corresponding to the second characteristic for transmission; mapping, in a case that the TSC data belongs to second attribute information and the data type is the event type, the TSC data to a third QoS flow corresponding to the first characteristic for transmission; and mapping, in a case that the TSC data belongs to the second attribute information and the data type is the general type, the TSC data to a fourth QoS flow corresponding to the second characteristic for transmission. In some possible embodiments, the attribute information includes at least one of the following: a clock domain, a standardization development organization identity, a source port identity, and version information of the Precision Time Protocol.

Since the attribute information includes information of at least one dimension, in this embodiment of this application, the used QoS flow may be determined from multiple dimensions. Determination may be first performed based on one dimension or multiple combined dimensions listed in the attribute information, and then a QoS flow to be used is determined based on the event type or the general type.

In some possible embodiments, in a case that the attribute information indicates the clock domain, the determining the QoS flow for transmitting TSC data in combination with the attribute information may include, for example, determining the clock domain of the TSC data; mapping, in a case that the TSC data belongs to a first clock domain and the data type is the event type, the TSC data to the first QoS flow corresponding to the first characteristic for transmission; mapping, in a case that the TSC data belongs to the first clock domain and the data type is the general type, the TSC data to the second QoS flow corresponding to the second characteristic for transmission; mapping, in a case that the TSC data belongs to a second clock domain and the data type is the event type, the TSC data to a third QoS flow corresponding to the first characteristic for transmission; and mapping, in a case that the TSC data belongs to the second clock domain and the data type is the general type, the TSC data to a fourth QoS flow corresponding to the second characteristic for transmission.

In the embodiments of this application, the clock domain is further considered. Transmission isolation may also be performed for TSC data of different clock domains. In a case that the data is TSC data of the first clock domain, the TSC data is mapped to a QoS flow corresponding to the first clock domain. In a case that the data is TSC data of the second clock domain, the TSC data is mapped to a QoS flow corresponding to the second clock domain. The data type of the TSC data is considered in different clock domains, so that QoS flows corresponding to different characteristics are selected.

For example, the TSC data of the Event type in Domain A may be mapped to the first QoS flow, such as a QoS Flow Xa. The TSC data of the General type in Domain A may be mapped to a second QoS flow, such as a QoS Flow Ya, and the Priority of the QoS Flow Xa is higher than that of the QoS Flow Ya, that is, the Priority of the QoS Flow Xa has a larger value than that of the QoS Flow Ya.

The TSC data of the Event type in Domain B may be mapped to the third QoS flow, such as a QoS Flow Xb. The TSC data of the General type in Domain B may be mapped to a fourth QoS flow, such as a QoS Flow Yb, and the Priority of the QoS Flow Xb is higher than that of the QoS Flow Yb, that is, the Priority of the QoS Flow Xb has a larger value than that of the QoS Flow Yb.

In some possible embodiments, in a case that the attribute information is a source port identity, the determining the QoS flow for transmitting the TSC data in conjunction with the attribute information may, for example, include: determining the source port identity of the TSC data; mapping, in a case that the TSC data belongs to a first source port identity and the data type is the event type, the TSC data to the first QoS flow corresponding to the first characteristic for transmission; mapping, in a case that the TSC data belongs to the first source port identity and the data type is the general type, the TSC data to the second QoS flow corresponding to the second characteristic for transmission; mapping, in a case that the TSC data belongs to a second source port identity and the data type is the event type, the TSC data to a third QoS flow corresponding to the first characteristic for transmission; and mapping, in a case that the TSC data belongs to the second source port identity and the data type is the general type, the TSC data to a fourth QoS flow corresponding to the second characteristic for transmission.

In the embodiments of this application, the source port identity is further considered. Transmission isolation may also be performed on TSC data of different source ports. In a case that the data is TSC data of a first source port, the TSC data is mapped to a QoS flow corresponding to the first source port. In a case that the data is TSC data of the second source port, the TSC data is mapped to a QoS flow corresponding to the second source port. The data type of the TSC data is considered for data of different source ports, so that QoS flows corresponding to different characteristics are selected.

For example, the TSC data of the Event type of source port identity A may be mapped to the first QoS flow, such as a QoS Flow Xa. The TSC data of the General type of source port identity A may be mapped to a second QoS flow, such as a QoS Flow Ya, and the Priority of the QoS Flow Xa is higher than that of the QoS Flow Ya, that is, the Priority of the QoS Flow Xa has a larger value than that of the QoS Flow Ya.

The TSC data of the Event type in source port identity B may be mapped to the third QoS flow, such as a QoS Flow Xb. The TSC data of the General type in source port identity B may be mapped to a fourth QoS flow, such as a QoS Flow Yb, and the Priority of the QoS Flow Xb is higher than that of the QoS Flow Yb, that is, the Priority of the QoS Flow Xb has a larger value than that of the QoS Flow Yb.

In some possible embodiments, in a case that the attribute information indicates a clock domain and a source port identity, the determining the QoS flow for transmitting the TSC data in conjunction with the attribute information may, for example, include: determining the clock domain and the source port identity of the TSC data; mapping, in a case that the TSC data belongs to a first clock domain and a first source port identity and the data type is the event type, the TSC data to the first QoS flow corresponding to the first characteristic for transmission; mapping, in a case that the TSC data belongs to the first clock domain and the first source port identity and the data type is the general type, the TSC data to the second QoS flow corresponding to the second characteristic for transmission; mapping, in a case that the TSC data belongs to the first clock domain and a second source port identity and the data type is the event type, the TSC data to a third QoS flow corresponding to the first characteristic for transmission; and mapping, in a case that the TSC data belongs to the first clock domain and the second source port identity and the data type is the general type, the TSC data to a fourth QoS flow corresponding to the second characteristic for transmission.

A solution for determining a QoS flow based on three dimensions is described according to an embodiment of this application. Determination is first performed based on the clock domain and the source port identity, and then a QoS flow is determined based on the event type or the general type.

In some possible embodiments, in a case that the first device is a UE, the mapping, based on a transmission characteristic, the TSC data to a QoS flow corresponding to the transmission characteristic for transmission may include: mapping, by the UE, the TSC data to an air interface resource indicated by the QoS flow corresponding to the transmission characteristic for uplink transmission.

In the embodiments of this application, for uplink data, the UE maps the TSC data to the air interface resources of the RAN for transmission.

In some possible embodiments, in a case that the first device is a UPF network element, the mapping, based on a transmission characteristic, the TSC data to a QoS flow corresponding to the transmission characteristic for transmission may include: mapping, by the UPF network element, the TSC data to a tunnel resource indicated by the QoS flow corresponding to the transmission characteristic for downlink transmission.

In the embodiments of this application, for downlink data, the UPF network element maps the TSC data to the corresponding tunnel resources for transmission. The tunnel resources may be understood with reference to the interfaces between the network elements in FIG. 1 and FIG. 2.

The network architecture, the Quality of Service flow management method, and the data transmission method involved in the embodiments of this application are described above. A Quality of service flow management device 60 and a data transmission device 70 according to the embodiments of this application are described below with reference to the drawings.

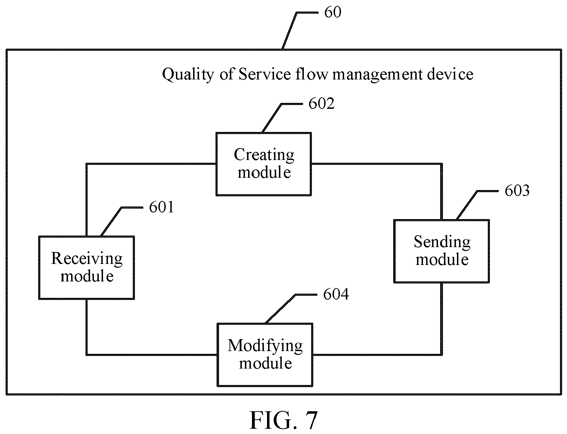

As shown in FIG. 7, the Quality of Service flow management device 60 according to the embodiments of this application may include: a receiving module 601, a creating module 602, and a sending module 603. The receiving module 601 is configured to receive a session creation request sent by a first device. The creating module 602 is configured to create a first QoS flow based on the session creation request received by the receiving module 601 and a QoS management policy, the first QoS flow corresponds to a first expanded Ethernet packet filter set, and the first expanded Ethernet packet filter set includes network type information and first information used for indicating a transmission characteristic. The sending module 603 is configured to send to the first device the first expanded Ethernet packet filter set corresponding to the first QoS flow created by the creating module 602.

Different QoS flows may be created for different types of TSC data in the embodiments of this application. In this way, during transmission of the TSC data, different types of TSC data can be transmitted by using different QoS flows, improving the accuracy of transmission of the TSC data.

In some possible embodiments, the device further includes a modifying module. The receiving module 601 is further configured to receive a session modification request sent by the first device. The modifying module 604 is configured to modify the first QoS flow to a second QoS flow based on the session modification request and the QoS management policy, the second QoS flow corresponds to a second extended Ethernet packet filter set, and the second extended Ethernet packet filter set includes network type information and second information used for indicating the transmission characteristics. The sending module 603 is further configured to send the second extended Ethernet packet filter set to the first device.

In some possible embodiments, in a case that the device is a UE, the first expanded Ethernet packet filter set and the second extended Ethernet packet filter set are included in a QoS rule to be sent to the UE.

In some possible embodiments, in a case that the first device is a UPF network element, the first expanded Ethernet packet filter set and the second extended Ethernet packet filter set are included in a PDR to be sent to the UPF network element.

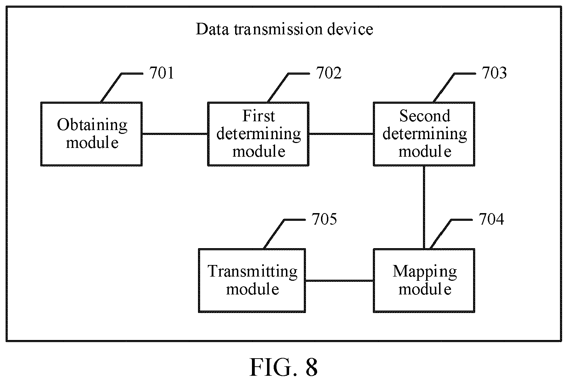

As shown in FIG. 8, the data transmission device 70 according to the embodiments of this application may include: an obtaining module 701, a first determining module 702, a second determining module 703, a mapping module 704, and a transmitting module 705. The obtaining module 701 is configured to obtain to-be-transmitted data. The first determining module 702 is configured to determine, based on network type information included in an extended Ethernet packet filter set, that the to-be-transmitted data obtained by the obtaining module 701 is TSC data. The second determining module 703 is configured to determine, based on the extended Ethernet packet filter set, a transmission characteristic of the TSC data determined by the first determining module 702. The mapping module 704 is configured to map, based on the transmission characteristic determined by the second determining module 703, the TSC data to a QoS flow corresponding to the transmission characteristic. The transmitting module 705 is configured to transmit the TSC data based on the QoS flow mapped by the mapping module 704.

In the embodiments of this application, during data transmission, in a case that the to-be-transmitted data is determined to be TSC data, different types of TSC data are transmitted using different QoS flows, improving the accuracy of transmission of the TSC data.

In some possible embodiments, in a case that the network type information is of an Ethertype, the first determining module 702 is configured to:
determine whether a parameter corresponding to the Ethertype of the to-be-transmitted data is used for indicating a TSC type; and
determine, in a case that the parameter corresponding to the Ethertype is used for indicating the TSC type, that the to-be-transmitted data is TSC data.

In some possible embodiments, the second determining module 703 is configured to:
determine a data type of the TSC data;
determine, in a case that the data type is an event type, that the transmission characteristic of the TSC data is a first characteristic; and
determine, in a case that the data type is a general type, that the transmission characteristic of the TSC data is a second characteristic. Data transmitted based on the first characteristic has a higher priority in resource allocation and scheduling than data transmitted based on the second characteristic.

In some possible embodiments, the second determining module 703 is configured to:
obtain an indicator identifying an indicating bit of the data type;
determine, in a case that the indicator is located in a first interval, that the data type is the event type; and
determine, in a case that the indicator is located in a second interval, that the data type is the general type, the first interval corresponds to the first characteristic, and the second interval corresponds to the second characteristic.

In some possible embodiments, the mapping module 704 is configured to:
map, in a case that the data type is the event type, the TSC data to a first QoS flow corresponding to the first characteristic; and
map, in a case that the data type is the general type, the TSC data to a second QoS flow corresponding to the second characteristic.

In some possible embodiments, the extended Ethernet packet filter set further includes attribute information of a protocol header field of the PTP/gPTP. The second determining module 703 is further configured to: determine the attribute information of the TSC data.

The mapping module 704 is configured to:
map, in a case that the TSC data belongs to first attribute information and the data type is the event type, the TSC data to a first QoS flow corresponding to the first characteristic for transmission;
map, in a case that the TSC data belongs to first attribute information and the data type is the general type, the TSC data to a second QoS flow corresponding to the second characteristic for transmission;
map, in a case that the TSC data belongs to second attribute information and the data type is the event type, the TSC data to a third QoS flow corresponding to the first characteristic for transmission; and
map, in a case that the TSC data belongs to second attribute information and the data type is the general type, the TSC data to a fourth QoS flow corresponding to the second characteristic for transmission.

In some possible implementations, the attribute information includes at least one of the following: a clock domain (domainNumber), a Standardization Development organization Identity (SdoId), a source port identity, and version information of the Precision Time Protocol (versionPTP).

In a case that the attribute information is a clock domain, the second determining module 703 is further configured to determine a clock domain of the TSC data. The mapping module 704 is further configured to:
map, in a case that the TSC data belongs to a first clock domain and the data type is the event type, the TSC data to a first QoS flow corresponding to the first characteristic;
map, in a case that the TSC data belongs to a first clock domain and the data type is the general type, the TSC data to a second QoS flow corresponding to the second characteristic;
map, in a case that the TSC data belongs to a second clock domain and the data type is the event type, the TSC data to a third QoS flow corresponding to the first characteristic; and
map, in a case that the TSC data belongs to a second clock domain and the data type is the general type, the TSC data to a fourth QoS flow corresponding to the second characteristic.

In a case that the attribute information is a source port identity, the second determining module 703 is further configured to determine a source port identity of the TSC data. The mapping module 704 is further configured to:
map, in a case that the TSC data belongs to a first source port identity and the data type is the event type, the TSC data to a first QoS flow corresponding to the first characteristic for transmission;
map, in a case that the TSC data belongs to a first source port identity and the data type is the general type, the TSC data to a second QoS flow corresponding to the second characteristic for transmission;
map, in a case that the TSC data belongs to a second source port identity and the data type is the event type, the TSC data to a third QoS flow corresponding to the first characteristic for transmission; and
map, in a case that the TSC data belongs to a second source port identity and the data type is the general type, the TSC data to a fourth QoS flow corresponding to the second characteristic for transmission.

In a case that the attribute information is a clock domain and a source port identity, the second determining module 703 is further configured to determine a clock domain and a source port identity of the TSC data. The mapping module 704 is further configured to:
map, in a case that the TSC data belongs to a first clock domain and a first source port identity and the data type is the event type, the TSC data to a first QoS flow corresponding to the first characteristic for transmission;
map, in a case that the TSC data belongs to a first clock domain and a first source port identity and the data type is the general type, the TSC data to a second QoS flow corresponding to the second characteristic for transmission;
map, in a case that the TSC data belongs to the first clock domain and a second source port identity and the data type is the event type, the TSC data to a third QoS flow corresponding to the first characteristic for transmission; and
map, in a case that the TSC data belongs to the first clock domain and a second source port identity and the data type is the general type, the TSC data to a fourth QoS flow corresponding to the second characteristic for transmission.

In a possible implementation, in a case that the device is a UE, the extended Ethernet packet filter set is issued to the UE by a Session Management Function (SMF) network element according to a QoS rule. In a case that the device is a UPF network element, the extended Ethernet packet filter set is issued to the UPF network element by the SMF network element according to a packet detection rule (PDR).

In some possible embodiments, the mapping module 704 is configured to map, in a case that the device is the UE, the TSC data to an air interface resource indicated by the QoS flow corresponding to the transmission characteristic for uplink transmission.

In some possible embodiments, the mapping module 704 is configured to map, in a case that the device is the UPF network element, the TSC data to a tunnel resource indicated by the QoS flow corresponding to the transmission characteristic for downlink transmission.

In some possible embodiments, the transmitting module 705 is further configured to transmitting a session creation request or a session modification request, the session creation request is used for triggering a second device to create a QoS flow, the session modification request is used for triggering the second device to modify a QoS flow.

In some possible embodiments, the transmission characteristic includes at least one of the following: a resource type, a priority, a PDB, a PER, a MDBV, an AV, an ARP, a TSN Source Port ID and Destination Port ID pair, a QFI, or a transport layer IP DSCP Marking.

It may be understood that the foregoing Quality of Service flow management device and the data transmission device implement the foregoing functions, and include hardware structures and/or software modules for implementing various functions. A skilled in the art would easily implement that in combination with the functions described in the embodiments disclosed herein, this application may be implemented in the form of hardware or a combination of hardware and computer software. Whether a function is performed by hardware or computer software driving hardware depends on particular applications and design constraints of the technical solutions. A person skilled in the art may use different methods to implement the described functions for each particular application, but it is not to be considered that the implementation goes beyond the scope of this application.

From the perspective of a physical apparatus, the foregoing Quality of Service flow management device and the data transmission device can be implemented by a physical device, or implemented by multiple physical devices together, or may be a logical functional unit in a physical device, which are not specifically defined in the embodiments of this application.

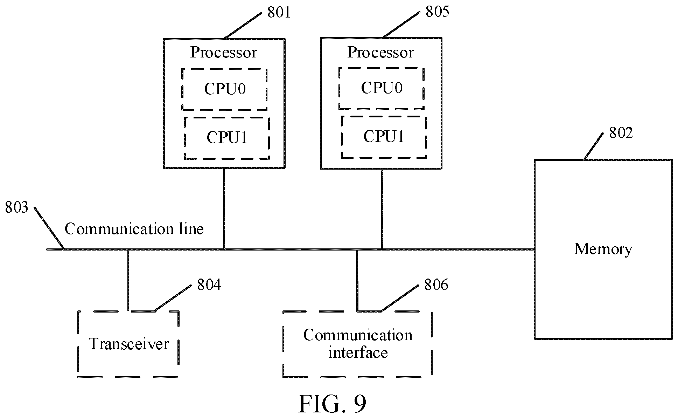

For example, the Quality of Service flow management device or the data transmission device may be implemented by the communication device in FIG. 9. FIG. 9 is a schematic structural diagram of hardware of a communication device according to an embodiment of this application. The communication device includes at least one processor 801, a memory 802, and a communication line 803. The communication device may also include at least one of a transceiver 804 and a communication interface 806.

The processor 801 may be a Central Processing Unit (CPU), a microprocessor, an Application-Specific Integrated Circuit (ASIC), or one or more integrated circuits configured to control the execution of programs of the solution of this application.

The communication line 803 may include a route, to transmit information between the foregoing components.

The transceiver 804 is in communication with other devices or communication networks by using any transceiver apparatus, such as Ethernet, a Radio Access Network (RAN), a Wireless Local Area Networks (WLAN), etc. The transceiver 804 may also be a transceiver circuit or a transceiver. In a case that the communication device is a first network functional entity, the communication device may include the transceiver.

The communication device may also include the communication interface 806.

The memory 802 may be a read-only memory (ROM) or a static storage device of another type that can store static information and instructions, a random access memory (RAM) or a dynamic storage device of another type that can store information and instructions, or an electrically erasable programmable read-only memory (EEPROM), a compact disc read-only memory (CD-ROM) or other optical disk storage, optical disc storage (including a compact disc, a laser disc, an optical disc, a digital versatile disc, or a Blu-ray disc, a disk storage medium or another magnetic storage device, or any other medium that can be used to carry or store expected program code in a command or data structure form and that can be accessed by a computer, but is not limited thereto. The memory may exist independently, and is connected to the processor 801 through the communication line 803. The memory 802 may also be integrated with the processor 801.

The memory 802 is configured to store computer-executable instructions for executing the solution of this application, and the processor 801 controls the execution of the instructions. The processor 801 is configured to execute the computer-executable instructions stored in the memory 802, so as to perform the Quality of Service flow management method or the data transmission method according to the foregoing method embodiments of this application.

In a possible implementation, the computer-executable instructions in the embodiments of this application may also be called application codes, which are not specifically limited in the embodiments of this application.

In a specific implementation, as an embodiment, the processor 801 may include one or more CPUs, such as CPU0 and CPU1 in FIG. 9.

In a specific implementation, as an embodiment, the communication device may include multiple processors, such as the processor 801 and the processor 805 in FIG. 9. Each of these processors can be a single-CPU processor or a multi-core (multi-CPU) processor. The processor here may refer to one or more devices, circuits, and/or processing cores for processing data (for example, the computer-executable instructions).

From the perspective of functional units, the functional units of the Quality of Service flow management device or the data transmission device may be divided according to the foregoing method embodiments this application. For example, various functional units may be obtained by dividing with respect to the functions, or two or more functions may be integrated in one functional unit. The integrated unit may be implemented in the form of hardware, or may be implemented in a form of a software functional unit.

The receiving module 601, the sending module 603, and the transmitting module 705 may be implemented by the transceiver 804. The creating module 602, the modifying module 604, the obtaining module 701, the first determining module 702, the second determining module 703, and the mapping module 704 may be implemented by the processor 801 or the processor 805.

All or some of the foregoing embodiments may be implemented by using software, hardware, firmware, or any combination thereof. When software is used for implementation, implementation may be entirely or partially performed in the form of a computer program product.

The computer program product includes one or more computer instructions. When the computer program instruction is loaded and executed on a computer, all or some of the procedures or functions according to the embodiments of this application are generated. The computer may be a general-purpose computer, a dedicated computer, a computer network, or other programmable apparatuses. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (such as a coaxial cable, an optical fiber, or a digital subscriber line (DSL)) or wireless (such as infrared, radio, or microwave or the like) manner. The computer-readable storage medium may be any usable medium that can be stored by a computer, or a data storage device, such as a server or a data center, integrating one or more usable media. The usable medium may be a magnetic medium (for example, a soft disk, a hard disk, or a magnetic tape), an optical medium (for example, a DVD), a semiconductor medium (for example, a solid state disk Solid State Disk (SSD)), or the like.

A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc.

The data transmission method and device, the Quality of Service flow management method and device, and the computer storage medium provided in the embodiments of this application are described above in detail. Although the principles and implementations of this application are described by using specific examples in this specification, the descriptions of the foregoing embodiments are merely intended to help understand the method and the core idea of this application. Meanwhile, a person skilled in the art may make modifications to the specific implementations and application range according to the idea of this application. In conclusion, the content of this specification shall not be construed as a limitation to this application.

## Claims

1. A data transmission method, applied to a first device, the method comprising:
obtaining to-be-transmitted data;
determining, based on network type information in an extended Ethernet packet filter set, that the to-be-transmitted data is Time Sensitive Communication (TSC) data;
determining a transmission characteristic of the TSC data based on the extended Ethernet packet filter set; and
mapping, based on the transmission characteristic, the TSC data to a Quality of Service (QoS) flow corresponding to the transmission characteristic for transmission.

2. The method according to claim 1, wherein in a case that the network type information is of an Ethertype, the determining, based on network type information in an extended Ethernet packet filter set, that the to-be-transmitted data is Time Sensitive Communication (TSC) data comprises:
determining whether a parameter corresponding to the Ethertype of the to-be-transmitted data is used for indicating a TSC type; and
determining, in a case that the parameter corresponding to the Ethertype is used for indicating the TSC type, that the to-be-transmitted data is TSC data.

3. The method according to claim 1, wherein the determining a transmission characteristic of the TSC data based on the extended Ethernet packet filter set comprises:
determining a data type of the TSC data;
determining, in a case that the data type is an event type, that the transmission characteristic of the TSC data is a first characteristic; and
determine in a case that the data type is a general type, that the transmission characteristic of the TSC data is a second characteristic, and wherein
data transmitted based on the first characteristic has a higher priority in resource allocation and resource scheduling than data transmitted based on the second characteristic.

4. The method according to claim 3, wherein the determining a data type of the TSC data comprises:
obtaining an indicator for identifying an indicating bit of the data type;
determining, in a case that the indicator is located in a first interval, that the data type is the event type; and
determining, in a case that the indicator is located in a second interval, that the data type is the general type, and wherein
the first interval corresponds to the first characteristic, and the second interval corresponds to the second characteristic.

5. The method according to claim 3 or 4, wherein the mapping, based on the transmission characteristic, the TSC data to a Quality of Service (QoS) flow corresponding to the transmission characteristic for transmission comprises:
mapping, in a case that the data type is the event type, the TSC data to a first QoS flow corresponding to the first characteristic for transmission; and
mapping, in a case that the datatype is the general type, the TSC data to a second QoS flow corresponding to the second characteristic for transmission.

6. The method according to claim 3 or 4, wherein the extended Ethernet packet filter set further comprises attribute information of a protocol header field of a Precision Time Protocol (PTP) or a general Precision Time Protocol (gPTP); and the method further comprises:
determining attribute information of the TSC data, and wherein
the mapping, based on the transmission characteristic, the TSC data to a Quality of Service (QoS) flow corresponding to the transmission characteristic for transmission comprises:
mapping, in a case that the TSC data belongs to first attribute information and the data type is the event type, the TSC data to a first QoS flow corresponding to the first characteristic for transmission;
mapping, in a case that the TSC data belongs to first attribute information and the data type is the general type, the TSC data to a second QoS flow corresponding to the second characteristic for transmission;
mapping, in a case that the TSC data belongs to second attribute information and the data type is the event type, the TSC data to a third QoS flow corresponding to the first characteristic for transmission; and
mapping, in a case that the TSC data belongs to second attribute information and the data type is the general type, the TSC data to a fourth QoS flow corresponding to the second characteristic for transmission.

7. The method according to claim 6, wherein the attribute information comprises at least one of the following: a clock domain, a standardization development organization identity, a source port identity, and version information of the Precision Time Protocol.

8. The method according to claim 1, wherein
in a case that the first device is a user equipment (UE), the extended Ethernet packet filter set is issued to the UE by a Session Management Function (SMF) network element according to a QoS rule; and
in a case that the first device is a User Plane Function (UPF) network element, the extended Ethernet packet filter set is issued to the UPF network element by the SMF network element according to a Packet Detection Rule (PDR).

9. The method according to any one of claims 1 to 4, wherein in a case that the first device is a user equipment (UE), the mapping, based on the transmission characteristic, the TSC data to a Quality of Service (QoS) flow corresponding to the transmission characteristic for transmission comprises:
mapping, by the UE, the TSC data to an air interface resource indicated by the QoS flow corresponding to the transmission characteristic for uplink transmission.

10. The method according to any one of claims 1 to 4, wherein in a case that the first device is a User Plane Function (UPF) network element, the mapping, based on the transmission characteristic, the TSC data to a Quality of Service (QoS) flow corresponding to the transmission characteristic for transmission comprises:
mapping, by the UPF network element, the TSC data to a tunnel resource indicated by the QoS flow corresponding to the transmission characteristic for downlink transmission.

11. The method according to any one of claims 1 to 4, wherein the method further comprises:
transmitting a session creation request or a session modification request, the session creation request being used for triggering a second device to create a QoS flow, the session modification request being used for triggering the second device to modify a QoS flow.

12. The method according to any one of claims 1 to 4, wherein the transmission characteristic comprises at least one of the following:
a resource type, a priority, a Packet Delay Budget (PDB), a Packet Error Rate (PER), a Maximum Data Burst Volume (MDBV), an Average Window (AV), an Allocation Retention and Priority (ARP), a Time Sensitive Network (TSN) source port identity and destination port identity pair, a QoS Flow Identity (QFI), or transport layer Internet Protocol Differentiated Services Code Point Marking.

13. A Quality of Service flow management method, applied to a second device, the method comprising:
receiving a session creation request transmitted by a first device;
creating a first Quality of Service (QoS) flow based on the session creation request and a QoS management policy, the first QoS flow corresponding to a first expanded Ethernet packet filter set, and the first expanded Ethernet packet filter set comprising first information used for indicating a transmission characteristic and network type information; and
sending the first expanded Ethernet packet filter set to the first device.

14. The method according to claim 13, further comprising:
receiving a session modification request transmitted by the first device;
modifying the first QoS flow to a second QoS flow based on the session modification request and the QoS management policy, the second QoS flow corresponding to a second extended Ethernet packet filter set, and the second extended Ethernet packet filter set comprising second information used for indicating a transmission characteristic and network type information; and
transmitting the second extended Ethernet packet filter set to the first device.

15. The method according to claim 14, wherein in a case that the first device is a User Equipment (UE), the first expanded Ethernet packet filter set and the second extended Ethernet packet filter set are comprised in a QoS rule to be transmitted to the UE.

16. The method according to claim 14, wherein in a case that the first device is a User Plane Function (UPF) network element, the first expanded Ethernet packet filter set and the second extended Ethernet packet filter set are comprised in a Packet Detection Rule (PDR) to be transmitted to the UPF network element.

17. A data transmission device, comprising:
an obtaining module, configured to obtain to-be-transmitted data;
a first determining module, configured to determine, based on network type information in an extended Ethernet packet filter set, that the to-be-transmitted data obtained by the obtaining module is Time Sensitive Communication (TSC) data;
a second determining module, configured to determine, based on the extended Ethernet packet filter set, a transmission characteristic of the TSC data determined by the first determining module;
a mapping module, configured to map, based on the transmission characteristic determined by the second determining module, the TSC data to a Quality of Service (QoS) flow corresponding to the transmission characteristic; and
a transmitting module, configured to transmit the TSC data based on the QoS flow mapped by the mapping module.

18. A Quality of Service flow management device, comprising:
a receiving module, configured to receive a session creation request transmitted by a first device;
a creating module, configured to create a first Quality of Service (QoS) flow based on the session creation request received by the receiving module and a QoS management policy, the first QoS flow corresponding to a first expanded Ethernet packet filter set, and the first expanded Ethernet packet filter set comprising first information used for indicating a transmission characteristic and network type information; and
a sending module, configured to send to the first device the first expanded Ethernet packet filter set corresponding to the first QoS flow created by the creating module.

19. A data transmission device, comprising:
a communication interface;
a processor; and
a memory, wherein
the memory is configured to store computer executable instructions; and
when the data transmission device operates, the communication interface is configured to perform steps for data transmission according to any one of claims 1 to 12, and the processor is configured to execute the computer executable instructions stored in the memory to perform steps of the data transmission method according to any one of claims 1 to 12.

20. A Quality of Service flow management device, comprising:
a communication interface;
a processor; and
a memory, wherein
the memory is configured to store computer executable instructions; and
when the Quality of Service flow management device operates, the communication interface is configured to perform steps for transmitting and receiving according to any one of claims 13 to 16, and the processor is configured to execute the computer executable instructions stored in the memory, to perform steps of the QoS flow management method according to any one of claims 13 to 16.

21. A computer-readable storage medium comprising instructions, wherein the instructions, when run on a computer, cause the computer to perform the data transmission method according to any one of claims 1 to 12, or to perform the Quality of Service flow management method according to any one of claims 13 to 16.

22. A computer program product, wherein the computer program product, when executed, performs the data transmission method according to any one of claims 1 to 12, or performs the Quality of Service flow management method according to any one of claims 13 to 16.
